# EUROPEAN PATENT SPECIFICATION

(11) **EP 4 378 602 B1**
(45) Date of publication and mention of the grant of the patent: **20.08.2025**
(21) Application number: 22210251.9
(22) Date of filing: 29.11.2022
(51) Int. Cl.: B21B 1/092

(54) **METHOD AND APPARATUS FOR MANUFACTURING AN ELEVATOR GUIDE RAIL AND CORRESPONDING ELEVATOR GUIDE RAIL**
VERFAHREN UND VORRICHTUNG ZUR HERSTELLUNG EINER AUFZUGSFÜHRUNGSSCHIENE UND ENTSPRECHENDE AUFZUGSFÜHRUNGSSCHIENE
PROCÉDÉ ET APPAREIL DE FABRICATION D'UN RAIL DE GUIDAGE D'ASCENSEUR ET RAIL DE GUIDAGE D'ASCENSEUR CORRESPONDANT

(43) Date of publication of application: 05.06.2024
(73) Proprietor: Vol-Stahl GmbH, 01067 Dresden (DE)
(72) Inventor: VOLOSKOV, Mikhail, 01067 Dresden (DE); DEDOV, Stanislav, 01067 Dresden (DE)
(74) Representative: Laqua, Bernd Christian Kurt

(56) References cited:
- CN-A- 102 335 680
- CN-A- 112 410 515
- CN-C- 1 142 042
- CN-U- 203 003 488

## Description

The present disclosure generally relates to the manufacturing of elevator guide rails. More particularly, the present disclosure relates to a method and apparatus for manufacturing an elevator guide rail where only a head portion of a hot-formed guide rail is further cold-formed, and to a corresponding elevator guide rail.

Guide rails for a passenger lift or service lift provide for guiding the car of the lift or the counterweight of the lift along the moving direction of the car or the counterweight. The grades and quality as well as dimensional characteristics and tolerances of such guide rails are standardised, for example in norm ISO 7465:2007.

The norm distinguishes between cold-drawn rails (A type), machined rails (B type) and high precision machined rails (BE type). The tensile strength Rₘ of the raw material (steel) shall be at least 370 MPa (N/mm²) and not more than 520 MPa. During cold drawing, the material is pressed and, hence, its hardness and tensile strength increase. Thus, the norm recommends using steel grade E 235 B for A-type rails and steel grade E 275 B for B- and BE-type rails. Moreover, the norm defines a surface finish and roughness parameters, particularly for the guide rail blade, i.e., the surface on/along which a component of the car or counterweight moves.

However, machining the guide rails is time intensive so that, for the production of B-type and BE-type guide rails, this production step forms a bottleneck of the entire manufacturing. The machining is thus slow, increases production costs and requires large machinery, i.e., a large production space. In addition, in order to produce A-type rails as well as B- and/or BE-type rails, a large production space is also required.

Document CN 102 335 680 A relates to manufacturing of elevator guide rails by adopting a roll of a rolling mill in a rolling stage as a medium-alloy roller. Before an elevator guide rail is processed through a cold drawing process, a hot rolled steel billet is processed through steps of softening, distressing, and annealing. The billet is then drawn by a chain drawbench, wherein a hole shape of a cold drawing mould is similar to that of a finished product.

It is an object of the present disclosure to provide a method and apparatus for manufacturing elevator guide rails in a more time and cost effective way.

According to a first aspect of the present disclosure, a method for manufacturing an elevator guide rail comprises providing a hot-formed guide rail having, in a cross-section, a head portion and a foot portion, and cold-forming the provided guide rail through a die, wherein said cold-forming is applied only to the head portion and not to the foot portion, wherein the cold-formed head portion forms a tread of the guide rail.

The cold-forming of the head portion avoids the time-consuming machining of the elevator guide rail, while the tread of the guide rail (i.e., the blade or surface on/along which a guiding component of the elevator car or counterweight glides/moves/runs/etc.) is formed in a single manufacturing step. For instance, while machining the guide rail may require minutes for each rail, the cold-forming can be achieved within seconds. Moreover, geometrical precision and a blank surface with low roughness is required for the tread (head portion) of the guide rail. The cold-forming provides such properties to the guide rail due to the compression of the material. Since only a portion of the guide rail is cold-formed, the cold-forming requires less power and is faster than cold-forming the entire surface of the guide rail as it is necessary for A-type guide rails.

Moreover, the norm suggests type A guide rails for rail sizes T45 to T90 and type B or BE guide rails for rail sizes T75 to T140. The method disclosed herein, on the other hand, allows manufacturing of any rail size with the same manufacturing steps. Thus, elevator guide rail manufacturing becomes less complex and the disclosed method is universally applicable.

In addition, since there is no machining of the guide rail, no material losses occur in the disclosed manufacturing method. This reduces the amount of raw material for producing the guide rails.

It is to be understood that any raw material can be employed and the present disclosure is not restricted to hot-formed guide rails. For instance, any hot-formed, e.g. hot-rolled or hot-drawn or hot-extruded or hot-forged, raw material can be employed for the production of a guide rail. Nevertheless, a hot-rolled guide rail can be provided with already precise dimensions, so that the further deformation, particularly during the cold-forming step of the disclosed method, is less time, energy and cost intensive.

In an implementation variant, said cold-forming can be adapted to achieve a deformation degree between 1.5% and 5%, preferably between 2.5% and 4%, and most preferably between 3.1% and 3.8%. In other words, the hot-formed raw guide rail is only slightly deformed at its head portion. For instance, for an average sized guide rail, the head thickness or width (when viewing the head portion in the cross-sectional direction of the guide rail, such as the size between two opposing tread surfaces of the head portion) can be reduced by approximately 0.3 to 0.6 mm, preferably 0.4 to 0.5 mm, and the head height can be reduced by approximately 0.4 to 0.8 mm, preferably 0.5 to 0.7 mm, due to the cold-forming.

Such small deformation degree allows cold-forming in a single step or in only a few cold-forming steps, such as two or three runs through corresponding dies sequentially having smaller cross-sectional openings.

Moreover, the deformation degree should not significantly fall under the lower limit of the above ranges since, otherwise, the desired surface properties may not be achieved. Specifically, having a deformation degree in the most preferred range can lead to a surface roughness required by the norm without further processing of the surface.

In another implementation variant, said providing the guide rail can comprise providing a guide rail of a steel grade between E235 and E275, preferably between E235 and E265. On the one hand, any recommended steel type can be provided to manufacture an elevator guide rail. Since the cold-forming compresses the material, its hardness and tensile strength increases. Thus, if employing E275 grade, the resulting elevator guide rail may exceed the maximum tensile strength of 520 MPa. Therefore, a steel grade lower than E275 can be employed and the resulting guide rail still fulfils the requirements of the norm.

Alternatively or additionally, said providing the guide rail can comprise providing a guide rail of a steel having a tensile strength between 260 MPa and 500 MPa, preferably between 350 MPa and 500 MPa, and most preferably between 450 MPa and 495 MPa. Such steel grade can be cold-formed without exceeding the maximum norm limit of 520 MPa.

Keeping the resulting tensile strength under the maximum norm limit of 520 MPa can be achieved by keeping the deformation degree in the above-mentioned range, for example, between 3.1 % and 3.8 %.

In yet another implementation variant, said providing the guide rail can comprise providing a guide rail having a T-shaped cross-section, wherein the head portion is formed at at least a portion of one leg of the T-shaped cross-section. The foot portion is formed by two flanges extending from the head portion.

Additionally or alternatively, said providing the guide rail can comprise providing a guide rail of one of the types T45 to T140 according to ISO 7465:2007.

Also additionally or alternatively, said providing the guide rail can comprise providing a guide rail having an L-shaped cross-section, wherein the head portion is formed at at least a portion of one leg of the L-shaped cross-section. The foot portion is formed by the other leg of the L-shaped cross-section.

Further additionally or alternatively, said providing the guide rail can comprise providing a guide rail having a cross-section without a distinct foot portion. As a mere example, such guide rail can have a substantially rectangular cross-section. The head portion and a foot portion can be formed at opposite ends of the substantially rectangular cross-section. The cross-section may further have the same width over its entire height or may have at least two sections of different width. For instance, the foot portion can have a smaller cross-sectional width than the head portion of the substantially rectangular cross-section. Such type of guide rail allows mounting the guide rail, for example, in a clamping fixture, thereby reducing the space required for the mounting of the guide rail.

In general, the head portion and the foot portion respectively form parts of the guide rail having different functions. The foot portion is mainly used to mount the guide rail to a supporting structure of the elevator shaft. Furthermore, the foot portion can also be employed to connect the guide rail to another guide rail in a longitudinal direction thereof, for example, using a fish plate overlapping and mounted to both guide rails.

The head portion extends from the foot portion, such as into an open space of the elevator shaft when the guide rail is mounted in the elevator shaft. The head portion may be arranged at an angle to the foot portion (particularly when viewing the cross-section of the guide rail). As a mere example, the angle between the head portion and foot portion can be 90° +/- 10°. According to another example, the angle between the head portion and foot portion can be 0° or 180°, i.e., head and foot portion together have a (substantially) rectangular cross-section. Thus, the head portion provides at least one surface, along which a guiding component of the elevator car or counterweight can glide, move, roll or run, when the elevator car or counterweight moves up and down the elevator shaft. This at least one surface hence forms a tread of the guide rail.

In any case, the cold-forming is applied to said at least one surface of the head portion, particularly at least one surface forming the tread of the guide rail. The cold-forming is not applied to a surface of the foot portion and/or the cold-forming may not be applied to a surface of the head portion not forming a tread (or blade) of the guide rail. This saves energy and time by reducing the overall level of deformation on the entire guide rail.

In a further implementation variant, said cold-forming comprises cold-rolling, cold-drawing, or a combination thereof. For instance, cold-rolling allows deformation of at least a portion of the guide rail with a reduced frictional component, so that less heat is generated during cold-forming. On the other hand, cold-drawing is achieved by providing a fixed (non-moving) die having a cross-sectional opening slightly smaller than the provided hot-formed guide rail. By drawing the guide rail through the die, at least a portion of the guide rail is deformed. It is to be understood that a combination of cold-rolling and cold-drawing is possible in any desired manner. For example, a particular surface of the guide rail, such as the tread or blade surface(s), can be cold-rolled, while a top of the head portion is cold-drawn, or vice versa. In any case, a portion of the guide rail becomes smaller in at least one cross-sectional direction.

In an implementation variant, the method can further comprise heating the cold-formed guide rail to anneal at least the head portion of the guide rail. For example, if the raw steel already has a high tensile strength, cold-forming may lead to a tensile strength exceeding the maximum of 520 MPa. By annealing at least the head portion of the guide rail, the tensile strength and other mechanical properties induced by the cold-forming can be reduced. As an example only, the heating can be achieved by induction heating of at least the head portion of the cold-formed guide rail.

According to a second aspect of the present disclosure, an elevator guide rail comprises a head portion forming a tread of the guide rail, and a foot portion, wherein the guide rail is manufactured according to (or "obtained by") the method of the first aspect or at least one of its variants.

The elevator guide rail, which is only partially cold-formed, may have particular material properties in a surface region of the cold-formed head portion. For instance, as the material of the guide rail is partially work-hardened due to the cold-forming process, it will have an increased tensile strength. For instance, the cold-forming can increase the tensile strength of the head portion up to 100 MPa compared to the (non-formed) foot portion. In addition, a smoother surface, i.e., a smaller roughness parameter value, may be achieved during the cold-forming.

Thus, the elevator guide rail according to the second aspect can be distinguished from guide rails produced by another (e.g., conventional) manufacturing process by comparing the tensile strength of the head portion and the foot portion and determining whether the tensile strength of the head portion is higher. Likewise, the surface roughness can be smaller (smoother) at the head portion compared to the foot portion.

In addition, a microscopic analysis of the elevator guide rail according to the second aspect may show an elongated microstructure of the steel, particularly in the surface region of the cold-formed (part of the) head portion. Thus, the elevator guide rail according to the second aspect can be distinguished from guide rails produced by another (e.g., conventional) process by comparing the microstructure at the head portion, for instance at a tread, and at the foot portion, for example.

According to a third aspect to of the present disclosure, an apparatus for manufacturing an elevator guide rail comprises a receiving component configured to receive a hot-formed guide rail having, in a cross-section, a head portion and a foot portion, and a die configured to cold-form only the head portion and not the foot portion of the provided guide rail, wherein the cold-formed head portion forms a tread of the guide rail. The apparatus further comprises a moving component configured to move the guide rail through the die. For instance, the moving component can pull the guide rail through the die.

In an implementation variant, the die can be implemented by one or more propelled or non-propelled rollers that cold-roll at least a portion of the guide rail. For instance, a pair of vertical rollers and a pair of horizontal rollers can be employed. Alternatively or additionally, the die may function as a cold-drawing component by providing a fixed die having a cross-sectional opening slightly smaller than the provided hot-formed guide rail. It is to be understood that a combination of rollers and fixed die can be achieved in any desired form, so that portions of the guide rail are cold-rolled and other portions are cold-drawn. In any case, a portion of the guide rail becomes smaller in at least one cross-sectional direction.

In another implementation variant, the die can comprise a plurality of partial dies, each of which cold-forms a surface of the head portion. For instance, each partial die may cold-form a surface of the head portion, so that the number of deformed surfaces corresponds to the number of partial dies. Alternatively, a partial die may deform more than one surface of the guide rail, such as an L-shaped partial die.

As an example only, the plurality of partial dies can comprise at least one roller for cold-rolling the corresponding portion of the head portion of the guide rail.

Optionally, the remaining partial die or dies of the plurality of partial dies is/are one or more fixed dies.

In yet another implementation variant, the die can comprise at least one guiding block, each of which is configured to support the guide rail in the die. In other words, the die comprises at least one portion that does not deform a corresponding surface of the guide rail, but allows gliding or rolling of the guide rail along the guiding block.

In a further implementation variant, the apparatus can further comprise a heating component configured to heat at least a portion of the cold-formed guide rail. Such heating component can be implemented in-line in the production process, such as close to or directly after the die (in the moving direction of the guide rail through the apparatus).

This particularly allows annealing at least the head portion of the guide rail, in order to reduce particular mechanical properties of the cold-formed guide rail.

As an example only, the heating component can be or can comprise an induction heating component or induction heater configured to increase the temperature of at least the head portion of the cold-formed guide rail.

The present disclosure is not restricted to the described aspects and variants in the described form and order. Specifically, the description of aspects and variants is not to be understood as a specific limiting grouping of features. It is to be understood that the present disclosure also covers combinations of the aspects and variants not explicitly described. Thus, each variant or optional feature can be combined with any other aspect, variant, optional feature or even combinations thereof.

In the following, the present disclosure will further be described with reference to exemplary embodiments illustrated in the figures, in which:
- Figures 1A and 1B: schematically illustrate cross-sections of an exemplary elevator guide rails;
- Figure 2: schematically illustrates a perspective view of an exemplary apparatus for manufacturing an elevator guide rail;
- Figure 3: schematically illustrates a plurality of partial dies;
- Figure 4: schematically illustrates a side view of an exemplary apparatus for manufacturing an elevator guide rail; and
- Figure 5: illustrates a flow diagram of a method for manufacturing an elevator guide rail.

In the following description, for purposes of explanation and not limitation, specific details are set forth in order to provide a thorough understanding of the present disclosure. It will be apparent to one skilled in the art that the present disclosure may be practiced in other implementations that depart from these specific details.

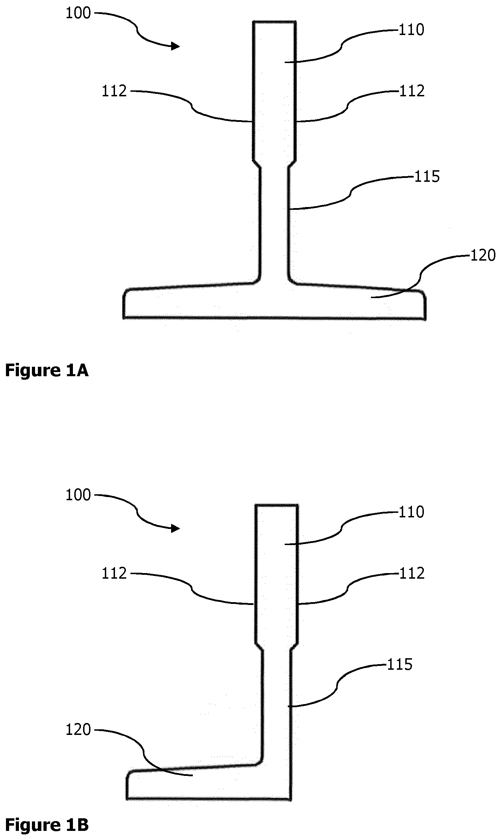

Figure 1A schematically illustrates a cross section of an exemplary elevator guide rail 100. Such guide rail 100 may have a T-shaped cross-section forming a head portion 110 and a foot portion 120, which is only one example of a guide rail. The head and foot portion is 110, 120 may also be referred to as head section and foot section, respectively. Particularly, the foot portion 120 may be formed by two flanges extending from the head portion 110. The head portion 110 can form or comprise a tread 112 (also referred to as a blade or gliding surface or guiding surface) of the guide rail 100. A car or counterweight of the elevator (not illustrated) usually has a component connected thereto that runs along the guide rail 100, so that the car or counterweight is guided along its path up and down the elevator shaft. Such component may include rollers or gliders that contact the tread 112 of the head portion 110.

Optionally, the head portion 110 can further be separated into a section forming the tread 112 of the guide rail 100 and an intermediate section 115. The intermediate section 115, particularly a length of the intermediate section 115, may hence solely facilitate placing the tread 112 in the right position in relation to the foot portion 120, i.e., in the right position within the elevator shaft.

Figure 1B schematically illustrates a cross-section of another exemplary elevator guide rail 100. Such guide rail 100 may have a substantially L-shaped cross-section forming a head portion 110 and a foot portion 120, which is also only one example of a guide rail. Particularly, in this example, the foot portion 120 extends from the head portion 110 in one direction at an angle with respect to an extent of the head portion 110. This allows reducing the space required for the mounting of the guide rail 100 compared to a guide rail 100 having a T-shaped cross-section (as in Figure 1A). The head portion 110 can form or comprise a tread 112, as in the example of Figure 1A. The detailed description of such tread 112 will hence be omitted to avoid redundant explanations.

It is to be noted that, in Figures 1A and 1B, the head portion 110 and the foot portion 120 as well as the intermediate section 115 are illustrated as having a different width. While this may reflect the actual form of such guide rail 100, Figures 1A and 1B use this illustration also to distinguish between the tread 112 of the head portion 110 and the foot portion 120. A guide rail 100, however, is not restricted to such cross-sectional shape. For instance, a guide rail 100 may have the same cross-sectional width over the entire height (of the head portion 110) and over the entire extent of the one or two flanges of the foot portion 120.

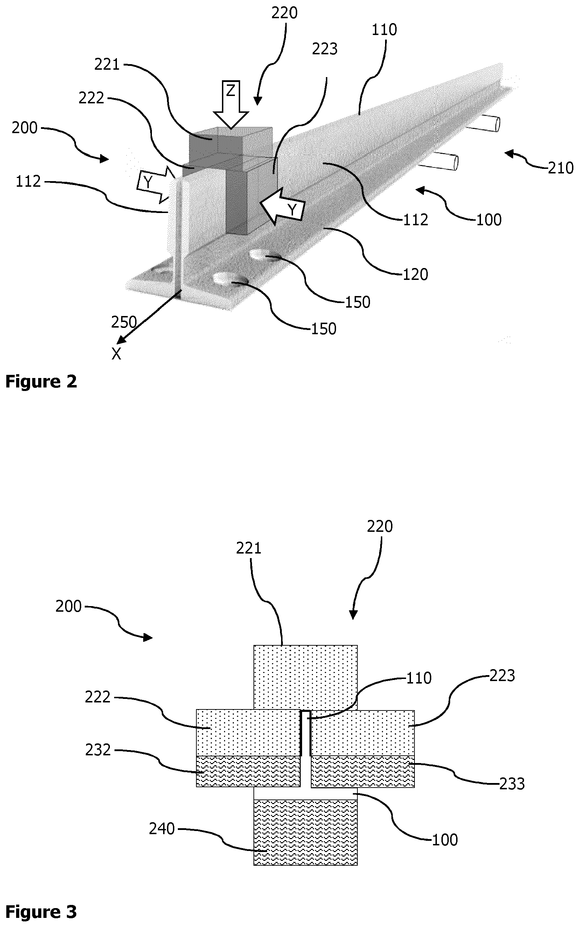

Figure 2 schematically illustrates a perspective view of an exemplary apparatus 200 for manufacturing an elevator guide rail 100. The apparatus 200 comprises a receiving component 210 configured to receive a guide rail 100. The receiving component 210 can simply be implemented as rollers on which the guide rail 100 rolls. It is to be understood that the receiving component 210 can have any shape and form for controlling a movement of the guide rail 100 along its longitudinal axis (X-axis).

The guide rail 100 can comprise a head portion 110 and a foot portion 120 as described with respect to Figure 1A or 1B. The apparatus 200 further comprises a die 220 configured to cold-form a portion of the guide rail 100, particularly at least a part of the head portion 110. This part of the head portion 110 forms a tread 112 of the guide rail 100. Such tread 112 requires particular mechanical properties and surface parameters, in order to facilitate guiding the car or counterweight of the elevator with reduced friction and small tolerances. In order to achieve the required mechanical properties and surface parameters, the die 220 cold-forms this part of the head portion 110. As is exemplary illustrated in Figure 2, the die 220 comprises an upper section 221 acting in a Z-axis direction on a top surface of the head portion 110, and two side sections 222, 223 acting in a Y-axis direction and opposite to one another. The side sections 222, 223 form the tread 112 on each side of the guide rail 100. The top surface of the head portion 110 can also form a tread, i.e., a surface having a low roughness for good gliding and guiding capabilities of the guide rail 100.

The die 220 can comprise a plurality of partial dies, each of which cold-forms a surface of the head portion 110. It is to be understood that the die 220 may comprise less partial dies than illustrated in the figures. For instance, the upper section 221 of the die 220 can be omitted, if the corresponding surface of the guide rail 100 does not need to be cold-formed. With additional reference to Figure 3, the partial dies 221 to 223 can comprise one or more rollers for cold-rolling the corresponding part of the head portion 110. As a mere example, side sections 222, 223 may be implemented as horizontal rollers cold-forming the tread 112 of the guide rail 100. The upper section 221 can be a fixed die cold-forming the top surface of the guide rail 100.

While the die 220 can comprise only these sections 221 to 223 cold-forming the head portion 110, the die 220 can optionally include further die sections. For instance, there can be a bottom block 240, which is configured to support the guide rail 100 in the die 220. Such bottom block 240 can form a support for the guide rail 100, particularly against the forces induced by cold-forming upper section 221 of die 220. Furthermore, additional side sections 232, 233 may be present, which guide the guide rail 100 through the die 220, but without cold-forming the corresponding part of the guide rail 100. Such side sections 232, 233 and/or bottom block 240 may have a larger size, so that an area supporting the guide rail 100 is much larger than a contact surface between the cold-forming portions of the die 220 and the guide rail 100. This avoids cold-forming the guide rail 100 in areas not forming the tread 112.

It is to be understood that the size, form and location of the partial dies 221 to 223 and guiding blocks 232, 233, 240 are for illustrative purposes only. These parts of the die 220 can generally have any form and shape necessary to cold-form (at least a part of) the head portion 110 of the guide rail 100, while leaving the remaining parts of the guide rail 100 unaltered.

Again with reference to Figure 2, the guide rail 100 may have through holes 150 at at least one end thereof. Such through holes 150 may allow connecting the guide rail 100 to another guide rail 100 (not illustrated) disposed in a longitudinal direction of the first guide rail 100. For instance, a fish plate may be mounted underneath the guide rail 100 using fasteners inserted into the through holes 150.

Such through holes 150 may further be used to couple the guide rail 100 to a moving component 250 of the apparatus 200 that is configured to move the guide rail 100 through the die 220. The moving component 250, however, can be coupled to the guide rail 100 in any other manner, such as welded to the guide rail 100, mounted to the head portion 110 and/or the intermediate section 115, for example.

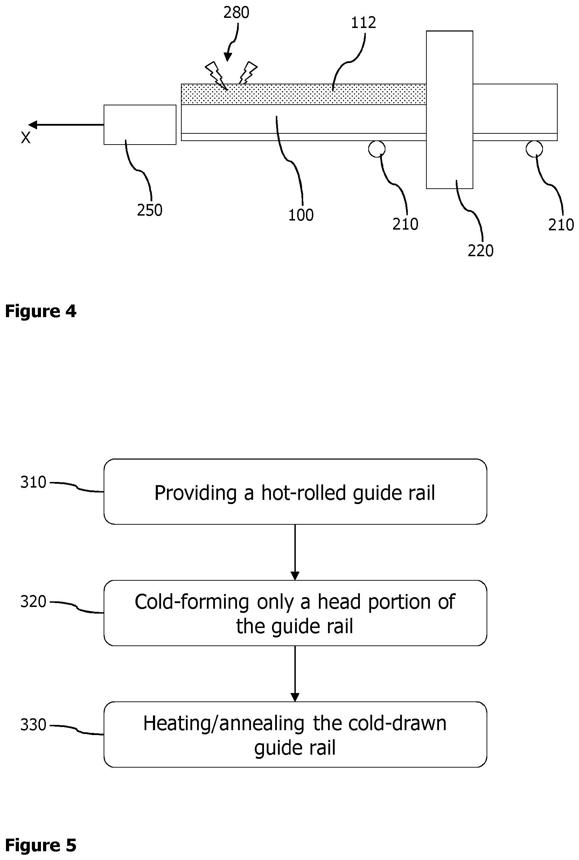

Figure 4 schematically illustrates a side view of the apparatus 200. Components that are identical to those already illustrated in and described with respect to Figures 2 and 3 have been indicated with the same reference signs and their description will be omitted to avoid redundant explanations. The moving component 250 can be arranged at a longitudinal end of the guide rail 100 and moves the guide rail 100 in the longitudinal direction thereof (the X-axis).

After cold-forming the tread 112 in the die 220, the mechanical properties of the guide rail 100 have changed. Particularly, a tensile strength of the head portion 110 may have increased. In order to anneal at least the head portion 110, a heating component 280 may increase the temperature of the head portion 110. For example, the heating component 280 can be an induction heating component, which facilitates heating only a portion of the guide rail 100, such as the head portion 110 and/or the tread 112. The heating component 280 may further be configured to only heat a surface of the guide rail 100. This not only saves energy, but allows maintaining the mechanical properties of the cold-formed head portion 110 as much as possible.

Figure 5 illustrates a flow diagram of a method for manufacturing an elevator guide rail 100, such as the guide rail 100 illustrated in Figures 1 to 4. The method starts, in step 310, by providing a hot formed (e.g., hot-rolled) guide rail 100 having a head portion 110 and a foot portion 120, such as guide rail 100 illustrated in Figures 1 and 2.

The hot-formed guide rail 100 may be of a steel grade between E 235 and E 275, preferably between E 235 and E 265. Such steel grade can be cold-formed, while keeping the mechanical properties within limits defined by the norm for elevator guide rails, such as ISO 7465:2007.

Alternatively or additionally, in step 310, there is provided a guide rail of a steel having a tensile strength between 260 MPa and 500 MPa, preferably between 350 MPa and 500 MPa, and most preferably between 450 MPa and 495 MPa. Even if the tensile strength increases due to cold-forming, the resulting tensile strength, particularly in the area of the head portion 110, is below a limit of 520 MPa specified in the above-mentioned norm.

The chemical composition of the raw guide rail 100, according to a mere example, is given in table 1 below.

**Table 1: exemplary chemical composition of the steel for the guide rail 100**

| C | Mn | S | Al |
|---|---|---|---|
| 0,075 | 0,368 | 0,0076 | 0,0034 |

In a following step 320, only a head portion 110 of the guide rail 100 is cold-formed. Such cold-forming, for example in a die 220, changes some of the mechanical properties of the guide rail 100. This is illustrated in below table 2 showing some test results performed on a guide rail 100 manufactured according to the disclosed method. The samples for testing the mechanical properties of the guide rail 100 have been taken from the head portion 110 and from each side of the foot portion 120, i.e., one sample from each flange forming the foot portion 120.

**Table 2: mechanical properties of samples of the guide rail 100**

| Sample | Tensile strength | 0.2 yield strength | yield ratio | Brinell hardness | Elongation at fracture |
|---|---|---|---|---|---|
| | Rm, MPa | RP0.2, MPa | RP0.2/Rm | HB | A5, % |
| Head portion | 510 | 443 | 0,87 | 152 | 22,5 |
| Foot portion L | 493 | 442 | 0,9 | 147 | 22,0 |
| Foot portion R | 464 | 389 | 0,84 | 135 | 27,0 |

As is derivable from above Table 2, the cold-forming of the head portion 110 increases the tensile strength, but keeps it below 520 MPa, which is a maximum limit required by the applicable norm ISO 7465:2007.

In order to achieve such mechanical properties, the cold-forming in step 320 may provide a deformation degree between 1.5% and 5%, preferably between 2.5% and 4%, and most preferably between 3.1% and 3.8%. The upper limit of such deformation degree range prevents the guide rail 100 from having a higher tensile strength, while the lower limit of such deformation degree range achieves the desired surface structure (surface parameters, such as roughness).

In a further step 330, the cold-formed guide rail may be heated to anneal at least the head portion 110 of the guide rail 100. This heating of the head portion 100 reduces the tensile strength and further allows straightening the guide rail 100, which may have been bent due to the cold-forming of only the head portion 110. The heating may be applied by an induction heating component, which is easy to install in-line with the die 220 and allows specific heating of the guide rail 100 being made of a ferrous metal.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A method for manufacturing an elevator guide rail (100), the method comprising:
providing (310) a hot-formed guide rail having, in a cross-section, a head portion (110) and a foot portion (120); and
cold-forming (320) the provided guide rail through a die (220),
**characterised in that**
said cold-forming is applied only to the head portion (110) and not to the foot portion (120), wherein the cold-formed head portion forms a tread (112) of the guide rail (100).

2. The method of claim 1, wherein said cold-forming is adapted to achieve a deformation degree between 1.5% and 5%, preferably between 2.5% and 4%, and most preferably between 3.1% and 3.8%.

3. The method of claim 1 or 2, wherein said providing (310) the guide rail (100) comprises providing a guide rail of a steel grade between E 235 and E 275, preferably between E 235 and E 265, or providing a guide rail of a steel having a tensile strength between 260 MPa and 500 MPa, preferably between 350 MPa and 500 MPa, and most preferably between 450 MPa and 495 MPa.

4. The method of one of claims 1 to 3, wherein said providing (310) the guide rail (100) comprises providing a guide rail having a T-shaped cross-section or an L-shaped cross-section or a rectangular cross-section, wherein the head portion (110) is formed at at least a portion of one leg of the T-shaped or L-shaped cross-section or a portion of the rectangular cross-section, and the foot portion (120) is formed by the remaining portion of the cross-section, and/or
wherein said providing the guide rail (100) comprises providing a guide rail type T45 to T140 according to ISO 7465:2007.

5. The method of one of claims 1 to 4, wherein said cold-forming (320) comprises cold-rolling, cold-drawing, or a combination thereof.

6. The method of one of claims 1 to 5, further comprising:
heating (330) the cold-formed guide rail (100) to anneal at least the head portion (110) of the guide rail (100), preferably by induction heating of at least the head portion (110) of the guide rail (100).

7. An elevator guide rail (100), comprising:
a head portion (110) forming a tread (112) of the guide rail (100); and
a foot portion (120),
wherein the guide rail (100) is manufactured according to the method of any one of claims 1 and 3 to 6.

8. An apparatus (200) for manufacturing an elevator guide rail (100), the apparatus comprising:
a receiving component (210) configured to receive a hot-formed guide rail (100) having, in a cross-section, a head portion (110) and a foot portion (120);
a die (220) configured to cold-form only the head portion (110) and not the foot portion (120) of the provided guide rail (100), wherein the cold-formed head portion (110) forms a tread (112) of the guide rail (100); and
a moving component (250) configured to move the guide rail (100) through the die (220).

9. The apparatus (200) of claim 8, wherein the die (220) comprises a plurality of partial dies (221 to 223), each of which cold-forms a surface of the head portion (110).

10. The apparatus (200) of claim 9, wherein the plurality of partial dies (221 to 223) comprises at least one roller for cold-rolling the corresponding portion of the head portion (110).

11. The apparatus (200) of claim 10, wherein the remaining partial dies (221 to 223) of the plurality of partial dies are fixed dies.

12. The apparatus (200) of any of claims 8 to 11, wherein the die (220) comprises at least one guiding block (232, 233, 240), each of which is configured to support the guide rail (100) in the die (220).

13. The apparatus (200) of one of claims 8 to 12, further comprising:
a heating component (280) configured to heat at least a portion of the cold-formed guide rail (100), preferably configured to anneal at least the head portion (110) of the guide rail (100).

14. The apparatus (200) of claim 13, wherein the heating component (280) is an induction heating component.

## Patentansprüche

1. Verfahren zur Herstellung einer Aufzugsführungsschiene (100), wobei das Verfahren umfasst:
Bereitstellen (310) einer warmgeformten Führungsschiene, die in einem Querschnitt einen Kopfabschnitt (110) und einen Fußabschnitt (120) aufweist; und
Kaltformen (320) der bereitgestellten Führungsschiene durch ein Umformwerkzeug (220),
**dadurch gekennzeichnet, dass**
das Kaltformen nur auf den Kopfteil (110) und nicht auf den Fußteil (120) angewendet wird, wobei der kaltgeformte Kopfteil eine Lauffläche (112) der Führungsschiene (100) bildet.

2. Verfahren nach Anspruch 1, wobei das Kaltformen so ausgelegt ist, dass ein Umformgrad zwischen 1,5 % und 5 %, vorzugsweise zwischen 2,5 % und 4 %, und am meisten bevorzugt zwischen 3,1 % und 3,8 % erreicht wird.

3. Verfahren nach Anspruch 1 oder 2, wobei das Bereitstellen (310) der Führungsschiene (100) das Bereitstellen einer Führungsschiene aus einer Stahlsorte zwischen E 235 und E 275, vorzugsweise zwischen E 235 und E 265, oder das Bereitstellen einer Führungsschiene aus einem Stahl mit einer Zugfestigkeit zwischen 260 MPa und 500 MPa, vorzugsweise zwischen 350 MPa und 500 MPa, und am meisten bevorzugt zwischen 450 MPa und 495 MPa umfasst.

4. Verfahren nach einem der Ansprüche 1 bis 3, wobei das Bereitstellen (310) der Führungsschiene (100) das Bereitstellen einer Führungsschiene mit einem T-förmigen Querschnitt oder einem L-förmigen Querschnitt oder einem rechteckigen Querschnitt umfasst, wobei der Kopfteil (110) an mindestens einem Teil eines Schenkels des T-förmigen oder L-förmigen Querschnitts oder eines Teils des rechteckigen Querschnitts gebildet wird und der Fußteil (120) durch den verbleibenden Teil des Querschnitts gebildet wird, und/oder
wobei die Bereitstellung der Führungsschiene (100) die Bereitstellung einer Führungsschiene vom Typ T45 bis T140 gemäß ISO 7465:2007 umfasst.

5. Verfahren nach einem der Ansprüche 1 bis 4, wobei das Kaltformen (320) ein Kaltwalzen, Kaltziehen oder eine Kombination davon umfasst.

6. Verfahren nach einem der Ansprüche 1 bis 5, das ferner umfasst:
Erwärmen (330) der kaltgeformten Führungsschiene (100), um zumindest den Kopfteil (110) der Führungsschiene (100) zu glühen, vorzugsweise durch Induktionserwärmung zumindest des Kopfteils (110) der Führungsschiene (100).

7. Aufzugsführungsschiene (100), umfassend:
einen Kopfteil (110), der eine Lauffläche (112) der Führungsschiene (100) bildet; und
einen Fußteil (120),
wobei die Führungsschiene (100) nach dem Verfahren nach einem der Ansprüche 1 und 3 bis 6 hergestellt ist.

8. Vorrichtung (200) zur Herstellung einer Aufzugsführungsschiene (100), wobei die Vorrichtung umfasst:
ein Aufnahmeteil (210), das dazu eingerichtet ist, eine warmgeformte Führungsschiene (100) aufzunehmen, die in einem Querschnitt einen Kopfabschnitt (110) und einen Fußabschnitt (120) aufweist;
ein Umformwerkzeug (220), das dazu eingerichtet ist, nur den Kopfabschnitt (110) und nicht den Fußabschnitt (120) der bereitgestellten Führungsschiene (100) kaltzuformen, wobei der kaltgeformte Kopfabschnitt (110) eine Lauffläche (112) der Führungsschiene (100) bildet; und
eine bewegliche Komponente (250), die dazu eingerichtet ist, die Führungsschiene (100) durch das Umformwerkzeug (220) zu bewegen.

9. Vorrichtung (200) nach Anspruch 8, wobei das Umformwerkzeug (220) eine Mehrzahl von Teil-Umformwerkzeugen (221 bis 223) umfasst, von denen jedes eine Oberfläche des Kopfteils (110) kaltformt.

10. Vorrichtung (200) nach Anspruch 9, wobei die Mehrzahl von Teil-Umformwerkzeugen (221 bis 223) mindestens eine Walze zum Kaltwalzen des entsprechenden Abschnitts des Kopfteils (110) umfasst.

11. Vorrichtung (200) nach Anspruch 10, wobei die verbleibenden Teil-Umformwerkzeuge (221 bis 223) der Mehrzahl von Teil-Umformwerkzeugen feste Umformwerkzeuge sind.

12. Vorrichtung (200) nach einem der Ansprüche 8 bis 11, wobei das Umformwerkzeug (220) mindestens einen Führungsblock (232, 233, 240) umfasst, von denen jeder dazu eingerichtet ist, die Führungsschiene (100) in dem Umformwerkzeug (220) zu stützen.

13. Vorrichtung (200) nach einem der Ansprüche 8 bis 12, ferner umfassend:
eine Heizkomponente (280), die dazu eingerichtet ist, zumindest einen Teil der kaltgeformten Führungsschiene (100) zu erwärmen, vorzugsweise dazu eingerichtet ist, zumindest den Kopfteil (110) der Führungsschiene (100) zu glühen.

14. Vorrichtung (200) nach Anspruch 13, wobei die Heizkomponente (280) eine Induktionsheizkomponente ist.

## Revendications

1. Procédé de fabrication d'un rail de guidage d'ascenseur (100), le procédé comprenant :
la fourniture (310) d'un rail de guidage formé à chaud présentant, en coupe transversale, une partie tête (110) et une partie pied (120) ; et
le formage à froid (320) du rail de guidage obtenu au moyen d'une matrice (220),
**caractérisé en ce que**
ledit formage à froid est appliqué uniquement à la partie tête (110) et non à la partie pied (120), dans lequel la partie tête formée à froid forme une bande de roulement (112) du rail de guidage (100).

2. Procédé selon la revendication 1, dans lequel ledit formage à froid est adapté pour atteindre un degré de déformation compris entre 1,5 % et 5 %, de préférence entre 2,5 % et 4 %, et idéalement entre 3,1 % et 3,8 %.

3. Procédé selon la revendication 1 ou 2, dans lequel ladite fourniture (310) du rail de guidage (100) comprend la fourniture d'un rail de guidage d'une qualité d'acier comprise entre E 235 et E 275, de préférence entre E 235 et E 265, ou la fourniture d'un rail de guidage d'un acier présentant une résistance à la traction comprise entre 260 MPa et 500 MPa, de préférence entre 350 MPa et 500 MPa, et idéalement entre 450 MPa et 495 MPa.

4. Procédé selon l'une quelconque des revendications 1 à 3, dans lequel ladite fourniture (310) du rail de guidage (100) comprend la fourniture d'un rail de guidage présentant une section transversale en T ou une section transversale en L ou une section transversale rectangulaire, dans lequel la partie tête (110) est formée au niveau au moins d'une partie d'une branche de la section transversale en T ou en L, ou d'une partie de la section transversale rectangulaire, et la partie pied (120) est formée par la partie restante de la section transversale, et/ou
dans lequel ladite fourniture du rail de guidage (100) comprend la fourniture d'un rail de guidage de type T45 à T140, conformément à la norme ISO 7465:2007.

5. Procédé selon l'une quelconque des revendications 1 à 4, dans lequel ledit formage à froid (320) comprend le laminage à froid, l'étirage à froid ou une combinaison de ceux-ci.

6. Procédé selon l'une quelconque des revendications 1 à 5, comprenant en outre :
le chauffage (330) du rail de guidage formé à froid (100) afin de recuire au moins la partie tête (110) du rail de guidage (100), de préférence par chauffage par induction d'au moins la partie tête (110) du rail de guidage (100).

7. Rail de guidage d'ascenseur (100), comprenant :
une partie tête (110) formant une bande de roulement (112) du rail de guidage (100) ; et
une partie pied (120),
dans lequel le rail de guidage (100) est fabriqué selon le procédé de l'une quelconque des revendications 1 et 3 à 6.

8. Appareil (200) de fabrication d'un rail de guidage d'ascenseur (100), l'appareil comprenant :
un composant de réception (210) conçu pour recevoir un rail de guidage formé à chaud (100) présentant, en coupe transversale, une partie tête (110) et une partie pied (120) ;
une matrice (220) conçue pour former à froid uniquement la partie tête (110) et non la partie pied (120) du rail de guidage (100) obtenu, dans lequel la partie tête formée à froid (110) forme une bande de roulement (112) du rail de guidage (100) ; et
un composant mobile (250) conçu pour déplacer le rail de guidage (100) à travers la matrice (220).

9. Appareil (200) selon la revendication 8, dans lequel la matrice (220) comprend une pluralité de matrices partielles (221 à 223), chacune formant à froid une surface de la partie tête (110).

10. Appareil (200) selon la revendication 9, dans lequel la pluralité de matrices partielles (221 à 223) comprend au moins un rouleau pour le laminage à froid de la partie correspondante de la partie tête (110).

11. Appareil (200) selon la revendication 10, dans lequel les matrices partielles (221 à 223) restantes de la pluralité de matrices partielles sont des matrices fixes.

12. Appareil (200) selon l'une quelconque des revendications 8 à 11, dans lequel la matrice (220) comprend au moins un bloc de guidage (232, 233, 240), chacun étant conçu pour supporter le rail de guidage (100) dans la matrice (220).

13. Appareil (200) selon l'une quelconque des revendications 8 à 12, comprenant en outre :
un composant chauffant (280) conçu pour chauffer au moins une partie du rail de guidage (100) formé à froid, de préférence conçu pour recuire au moins la partie tête (110) du rail de guidage (100).

14. Appareil (200) selon la revendication 13, dans lequel le composant chauffant (280) est un composant de chauffage par induction.
